# EUROPÄISCHE PATENTSCHRIFT

(11) **EP 4 008 137 B1**
(45) Veröffentlichungstag und Bekanntmachung des Hinweises auf die Patenterteilung: **16.07.2025**
(21) Anmeldenummer: 20780959.1
(22) Anmeldetag: 15.09.2020
(51) Int. Cl.: H04W 56/00

(54) **VERFAHREN UND VORRICHTUNG ZUR EINFACHEN ZEITSYNCHRONISATION EINER KOMMUNIKATION IM INDUSTRIELLEN UMFELD**
METHOD AND APPARATUS FOR FACILITATING TIME SYNCHRONIZATION OF COMMUNICATION IN AN INDUSTRIAL ENVIRONMENT
PROCÉDÉ ET DISPOSITIF DE SYNCHRONISATION EN TEMPS SIMPLE D'UNE COMMUNICATION DANS UN ENVIRONNEMENT INDUSTRIEL

(30) Priorität: 17.09.2019 EP 19197777
(43) Veröffentlichungstag der Anmeldung: 08.06.2022
(73) Patentinhaber: Siemens Aktiengesellschaft, 80333 München (DE)
(72) Erfinder: SINN, Ulrich, 91056 Erlangen (DE)
(74) Vertreter: Siemens Patent Attorneys
(86) Internationale Anmeldenummer: PCT/EP2020/075766
(87) Internationale Veröffentlichungsnummer: WO 2021/052959

(56) Entgegenhaltungen:
- EP-A1- 3 157 295
- WO-A1-2015/143464
- US-A1- 2011 009 059

## Beschreibung

Die fortschreitende Digitalisierung in der Industrie wäre ohne moderne Kommunikationstechnologien undenkbar. Gerade bei Anwendungen, bei denen das Verlegen von Kabeln zu aufwändig oder sogar unmöglich wäre, sind drahtlose Lösungen gefragt.

Um den Unternehmen die bestmögliche Infrastruktur für den Austausch von Daten aller Art zu bieten, wurden besondere Industrial Wireless LAN (IWLAN)-Produkte mit speziellen Zusatzfunktionen entwickelt - für die spezifischen Ansprüche von WLAN in der Industrie.

Insbesondere Anwendungen in der Automatisierung, wie z. B. der Automobilherstellung, bei Transport und Logistik, aber auch in der Öl- und Gasindustrie profitieren davon.

Der wesentliche Unterschied zu dem im Privatbereich stark verbreiteten WLAN liegt in der zeitgenauen Übertragung der Steuer- und Datensätze, was für den Einsatz in der Industrie zwingend erforderlich ist, um Maschinen sicher steuern zu können. Außerdem sind solche Geräte für einen größeren Temperaturbereich von -40 °C bis +70 °C ausgelegt.

Das Netz arbeitet mit einem speziellen Verschlüsselungsverfahren, um Manipulationen zu unterbinden.

Drahtlose Kommunikation über Industrial Wireless LAN (IWLAN) ist als Lösung schon in vielen Applikationen im Einsatz, beispielsweise bei mobilen Netzwerkteilnehmern wie fahrerlosen Transportsystemen oder bei Krananwendungen. Nicht nur die Hardware,sondern auch die Software der Geräte muss in der Industrie besondere Anforderungen erfüllen.

Die schnelle und sichere Übertragung der Datenpakete ist ein Muss in der Kommunikation für viele Einsatzfälle, Echtzeitkommunikation nach dem PROFINET und EtherNet/IP Protokoll sollte daher problemlos umsetzbar sein.

Werden Funksysteme, z, B. basierend auf Wi-Fi, in Real-time-Applikationen eigesetzt, ist häufig eine Uhrzeitsynchronisation erforderlich. Die gilt insbesondere dann, wenn das Funksystem in ein Bussystem für Real-time-Anwendungen wie z. B. TSN oder PROFINET integriert ist.

Kommerzielle Wi-Fi-Systeme sind aber nicht optimal für (hoch)genaue Zeitsynchronisation im Bereich von 1 µs und darunter geeignet.

Aktuelle Systeme stellen nur rudimentär Funktionen zur Zeitsynchronisation zur Verfügung.

Die in den zugrunde liegenden Standards IEEE 802.11 und 802.1 spezifizierten Funktionen sind nicht vollständig ausspezifiziert und nur als Hilfestellung zu verstehen.

In aktuellen Implementierungen sind zeitkritische Funktionen daher meist entweder in Hardware realisiert und damit unveränderlich oder als Firmware auf einem Embedded Mikro-Controller.

Weiterhin ist die Dauer des Ablaufs von, mittels Software realisierten, Funktionen nicht genau vorhersagbar bzw. messbar.

Eine genaue Zeitmessung erfordert immer den direkten Zugriff auf in Hardware realisierte Zähler oder Uhren. Ohne diesen entsteht immer ein mehr oder weniger großer Jitter, also die Varianz der Laufzeit der übertragenen Datenpakete.

Derzeit kann nur auf die vom Hersteller bereitgestellten Funktionen zurückgegriffen werden. Allerdings sind die Implementierungen meist nicht offengelegt und damit kaum für Dritte verwendbar.

Derzeit sind in dem beschriebenen technischen Umfeld keine kommerziellen Lösungen für eine hochgenaue Uhrzeitsynchronisation ohne die oben geschilderten Nachteile bekannt. Lösungen basieren auf der Propagierung der Uhrzeit unter Inkaufnahme von größerer Latenz (Verzögerung) und Jitter. Bekannt ist beispielsweise die Realisierung mit dem Network Time Protokoll (NTP, RFC 5905 ...), einen Standard zur Synchronisierung von Uhren in Computersystemen über paketbasierte Kommunikationsnetze. NTP sieht eine Referenzuhr vor, die als Fixpunkt für sämtliche Synchronisierungsprozesse fungiert. Alle Uhren werden also nach dieser Uhr bzw. Uhrzeit ausgerichtet. Es wurde speziell entwickelt, um eine zuverlässige Zeitangabe über Netzwerke mit variabler Paketlaufzeit zu ermöglichen. Das Protokoll ist allerdings aufwändig zu realisieren und weist Sicherheitslücken auf.

Aus der Druckschrift US 2011/0009059 A1 ist ein Verfahren bekannt, mit dem auf ein unidirektionales "reference signal" ein "information-bearing data signal" aufmoduliert wird. Die Synchronisation basiert immer auf dieser im Referenzsignal enthaltenen Information. Damit werden Takt und Phase synchronisiert.

In der Druckschrift WO 2015/143464 A1 ist ein System beschrieben, in dem ein unidirektionales und ein bidirektionales Funksystem verwendet werden.

Auf dem unidirektionalen Funksystem werden nach einem festen Zeitraster Synchronisationsnachrichten übertragen, deren Struktur dem Standard eines Globalen SatNav-Systems (z. B. GPS) entspricht.

Auf dem bidirektionalen Funksystem werden ausschließlich Datennachrichten gesendet.

Die Druckschrift EP 3157295 A1 beschreibt Zeitsynchronisation zweier Funkgeräte auf Basis der Berechnung des Link Delays (wie bei TSN, ...), mit Hilfe von Filtern wird die Synchronisations-Clock korrigiert (langsamer/schneller).

Es ist Aufgabe der Erfindung, in dem oben beschriebenen Umfeld der industriellen Drahtloskommunikation ein Kommunikationsverfahren und eine Kommunikationsvorrichtung anzugeben, welches einfach zu realisieren ist.

Es wird ein Verfahren gemäß den Merkmalen des Patentanspruch 1 vorgeschlagen, welches die Aufgabe löst.

Weiterhin wird die Aufgabe gelöst durch eine Vorrichtung, welche die Merkmale aufweist gemäß Patentanspruch 11.

Erfindungsgemäß wird für die Synchronisation ein zusätzlicher - idealerweise drahtloser - Kanal genutzt. Dafür kommt in einer vorteilhaften Ausgestaltung der Erfindung ein einfaches Funksystem zum Einsatz.

Als paralleler zweiter Kanal kommen beispielsweise in Frage:
- Einfache Systeme, die in den lizenzfreien Frequenzbändern 868 MHz (z. B. auf Basis des CC1100 von Texas Instruments) oder 2,4 GHz z. B. auf Basis des CC2500 von Texas Instruments) arbeiten,
- 868 MHz: Bei Impulsen ist der geforderte Duty Cycle kein Problem
- 2,4 GHz: bei max. 10 mW kein Duty Cycle, kein LBT gefordert
- Einfache UWB-Systeme (Ultra-Wideband), z. B. im Frequenzband 3 - 7 GHz
- Mit UWB-Systemen lassen sich sehr kurze Impulse erzeugen (Pikosekunden - wenige Nanosekunden), was eine sehr genaue Synchronisation ermöglicht
- Optische Systeme.

Über dieses werden Synchronisationszeitpunkte in Form einfacher Impulse oder kurzer Telegramme übertragen. Dies ist sowohl zyklisch als auch azyklisch möglich.

Im Weiteren wird die Erfindung durch eine Figur erläutert, die auch das bevorzugte Ausführungsbeispiel darstellt.

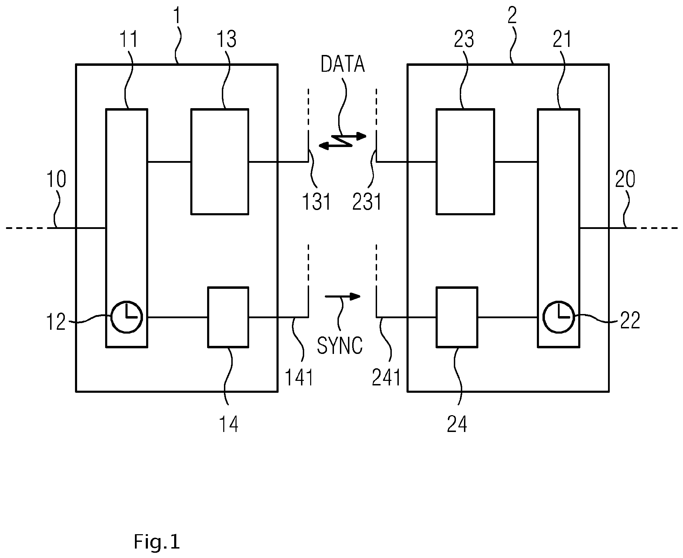

Die Figur zeigt ein erfindungsgemäßes System mit Sender 1 und Empfänger 2. Die Elemente 1 und 2 sind jeweils über einen Datenbus 10, 20 mit weiteren Netzelementen verbunden, die in der Figur nicht dargestellt sind.

Über eine erste drahtlose Verbindung werden die eigentlichen Daten, DATA, übermittelt. Hierfür weisen die Elemente 1, 2, jeweils eine entsprechende Sende- und Empfangseinrichtung 13, 23 mit passender Antenne 131, 231 auf. Diese kommen bzw. gehen zu einer geeigneten Kommunikationsschnittstelle 11, 21. Für die Zeitsynchronisierung wichtig ist die Echtzeituhr 12, 22, welche sowohl bei der Erzeugung der Synchronisationstakte als auch bei der Verarbeitung nach Empfang benötigt werden.

Erfindungsgemäß weisen die Einheiten 1, 2 auch eine zweite drahtlose Übertragungsmöglichkeit für die Signale zur Zeitsynchronisation auf, 14, 24, welche von der ersten, Datenübertragungsmöglichkeit getrennt ist und, wie bereits oben dargestellt, technisch sehr einfach ausgestaltet sein kann. Insbesondere ist es ausreichend, wenn die Übertragung der Zeitsynchonisierungsnachrichten unidirektional erfolgen kann.

Diese Impulse oder Telegramme zur Zeitsynchronisierung werden direkt von einer als Hardware ausgeführte Einheit, die für die Zeitsynchronisation zuständig ist und über eine hochgenaue Uhr 12, 24 verfügt, initiiert bzw. auf der zu synchronisierenden Seite einer solchen zugeführt. Das Funksystem kann sehr einfach und unidirektional ausgeführt sein. Der Sendevorgang wird ohne Verzögerung gestartet, um variable Verzögerungen zu vermeiden. Es kann beispielsweise ein Mechanismus analog dem Listen-before-Talk, auch bekannt als LBT, verwendet werden, d. h. es wird vor dem Senden geprüft, ob der Sendekanal von einem anderen Sender aktuell verwendet wird.

Die Laufzeit von der Sendevorrichtung (bspw. Antenne) des Initiators zur Empfangsvorrichtung des Empfängers ist damit nur noch die reine Signallaufzeit in den Komponenten und durch die Luft. Sollte eine variable Verzögerung des Sendevorganges (z. B. durch regulatorische Anforderungen) nicht zu vermeiden sein, kann die obige Hardware-Einheit diese bestimmen und den Wert als Korrekturwert selbst verwenden oder über das eigentliche Funksystem der zu synchronisierenden Seite übermitteln.

Im Wesentlichen parallel zum Synchronisationsimpuls oder - telegramm - kurz davor, gleichzeitig oder auch kurz danach - wird über die erste Kommunikationsverbindung (beispielsweise Wi-Fi) der genaue Zeitpunkt übertragen, an dem das Synchronisationssignal initiiert wurde. Dieser wird in der Zeitmesseinheit des Initiators ermittelt und der Wi-Fi-Komponente übergeben. Damit weiß der Empfänger, welcher Zeit der empfangene Impuls zuzuordnen ist. Der Empfang der Zeit und des Impulses kann dem Sender bestätigt
werden.

Synchronisationssignale unterschiedlicher Systeme lassen sich auseinanderhalten, indem sie z. B. auf unterschiedlichen Frequenzen und/oder mit unterschiedlichen Kodierungen gesendet werden.

Mit der vorgeschlagenen Lösung wird es ermöglicht, für die eigentliche Datenübertragung eine bewährte und kommerziell verfügbare Funktechnik wie z. B. Wi-Fi oder Bluetooth einzusetzen und trotzdem eine hochgenaue Uhrzeitsynchronisation zu integrieren.

Die hochgenaue Uhrzeitsynchronisation erleichtert der Einsatz von Funksystemen in Real-Time-Ethernet-Systemen wie TSN oder PROFINET.

Die für die Übertragung von Impulsen oder einfachen Telegrammen erforderliche Hardware und Software ist einfach und kostengünstig verfügbar.

## Patentansprüche

1. Verfahren zur Zeitsynchronisation einer Kommunikation zwischen Kommunikationselementen (1, 2) in einem industriellen Umfeld über eine erste, drahtlose Verbindung (DATA) mit Real-Time-Ethernet-Systemen basierend auf Time-Sensitive Networking TSN, wobei
direkt von einer Hardware-Einheit (11), die für die Zeitsynchronisation zuständig ist und über eine hochgenaue Uhr (12) verfügt, Synchronisationszeitpunkte initiiert bzw. auf der zu synchronisierenden Seite einer solchen zugeführt werden, wobei die Synchronisationszeitpunkte in Synchronisationssignale umgewandelt werden,
zur Übertragung der Synchronisationssignale ein zweiter, vom ersten verschiedener Übertragungskanal (SYNC) genutzt wird, dieser zweite Übertragungskanal ebenfalls als drahtlose Verbindung ausgeprägt ist, und
der Sendevorgang eine variable Verzögerung aufweist, und die Hardware-Einheit den Wert der Verzögerung bestimmt und den Wert als Korrekturwert auf das Synchronisationssignal verwendet oder über das erste Funksystem der dem empfangenden Kommunikationselement übermittelt.

2. Verfahren gemäß Patentanspruch 1
**dadurch gekennzeichnet, dass**
der zweite Übertragungskanal (SYNC) als einfaches Funksystem ausgestaltet ist, insbesondere ein Funksystem mit unidirektionaler Funkübertragung.

3. Verfahren gemäß einem der vorherigen Patentansprüche
**dadurch gekennzeichnet, dass**
die Synchronisationssignale in Form einfacher Impulse übertragen werden.

4. Verfahren gemäß einem der vorherigen Patentansprüche 1 oder 2
**dadurch gekennzeichnet, dass**
die Synchronisationssignale in Form kurzer Telegramme übertragen werden.

5. Verfahren nach einem der vorherigen Patentansprüche,
**dadurch gekennzeichnet, dass**
die erste drahtlose Verbindung gemäß dem iWLAN Standard arbeitet.

6. Verfahren gemäß einem der vorherigen Patentansprüche
**dadurch gekennzeichnet, dass**
die Synchronisationssignale zyklisch übertragen werden.

7. Verfahren gemäß einem der vorherigen Patentansprüche 1 bis 5, **dadurch gekennzeichnet, dass**
die Synchronisationssignale azyklisch übertragen werden.

8. Verfahren gemäß einem der vorherigen Patentansprüche
**dadurch gekennzeichnet, dass**
ein Sendevorgang der Synchonisationssignale ohne Verzögerung gestartet wird.

9. Verfahren gemäß einem der vorherigen Patentansprüche
**dadurch gekennzeichnet, dass**
das Synchronisationssignal eine Information enthält, von welchem Sender dieses Synchronisationssignal gesendet wurde.

10. Kommunikationselement (1, 2) zur Zeitsynchronisation einer Kommunikation in einem industriellen Umfeld mit Real-Time-Ethernet-Systemen basierend auf Time-Sensitive Networking TSN, umfassend
- ein erstes Verbindungselement (13, 23) zum Aufbau einer ersten drahtlosen Verbindung zur Nutzdatenübertragung (DATA),
- ein erstes Element (11, 21), für die Zeitsynchronisation, welches Synchronisationszeitpunkte initiiert bzw. auf der zu synchronisierenden Seite einer solchen zugeführt werden, wobei die Synchronisationszeitpunkte in Synchronisationssignale umgewandelt werden, mit
- einer hochgenauen Uhr (12, 22), insbesondere einer Echtzeituhr,
- ein zweites Verbindungselement (14, 24) zur Übertragung der Synchronisationssignale über einen zweiten, vom ersten verschiedener Übertragungskanal (SYNC), wobei
dieser zweite Übertragungskanal ebenfalls als drahtlose Verbindung ausgeprägt ist, und
der Sendevorgang eine variable Verzögerung aufweist, und eine Hardware-Einheit den Wert der Verzögerung bestimmt und den Wert als Korrekturwert auf das Synchronisationssignal verwendet oder über das erste Funksystem der dem empfangenden Kommunikationselement übermittelt.

11. Kommunikationselement gemäß Patentanspruch 10
**dadurch gekennzeichnet, dass**
der zweite Übertragungskanal (SYNC) als einfaches Funksystem ausgestaltet ist, insbesondere ein Funksystem mit unidirektionaler Funkübertragung.

12. Kommunikationselement gemäß einem der vorherigen Patentansprüche 10 oder 11
**dadurch gekennzeichnet, dass**
die Übertragung der Synchronisationssignale üb den zweiten Übertragungskanal (SYNC) in Form einfacher Impulse erfolgt.

13. Kommunikationselement gemäß einem der vorherigen Patentansprüche 10 oder 11
**dadurch gekennzeichnet, dass**
die Übertragung der Synchronisationssignale üb den zweiten Übertragungskanal (SYNC) in Form kurzer Telegramme erfolgt.

14. Kommunikationselement nach einem der vorherigen Patentansprüche 10 bis 13,
**dadurch gekennzeichnet, dass**
das erste Verbindungselement (13, 23) für die erste drahtlose Verbindung gemäß dem iWLAN Standard arbeitet.

15. Kommunikationselement gemäß einem der vorherigen Patentansprüche 10 bis 14
**dadurch gekennzeichnet, dass**
das zweite Verbindungselement einen Sendevorgang der Synchonisationssignale ohne Verzögerung durchführt, insbesondere nach einem Verfahren gemäß Listen-before-Talk.

## Claims

1. Method for time synchronization of a communication between communication elements (1, 2) in an industrial setting by way of a first, wireless connection (DATA) to real-time Ethernet systems based on time-sensitive networking TSN, wherein
synchronization times are initiated directly by a hardware unit (11) that is responsible for the time synchronization and has a highly accurate clock (12), or are supplied to one such on the side to be synchronized, the synchronization times being converted into synchronization signals,
a second transmission channel (SYNC), which is different from the first, is used to transmit the synchronization signals, this second transmission channel likewise being in the form of a wireless connection, and
the transmission process has a variable delay, and the hardware unit determines the value of the delay and uses the value as a correction value for the synchronization signal or conveys said value to the receiving communication element by way of the first radio system.

2. Method according to Patent Claim **1,**
**characterized in that**
the second transmission channel (SYNC) is configured as a simple radio system, in particular a radio system with unidirectional radio transmission.

3. Method according to either of the preceding patent claims,
**characterized in that**
the synchronization signals are transmitted in the form of single pulses.

4. Method according to either of preceding Patent Claims 1 and 2,
**characterized in that**
the synchronization signals are transmitted in the form of short telegrams.

5. Method according to one of the preceding patent claims,
**characterized in that**
the first wireless connection operates according to the iWLAN standard.

6. Method according to one of the preceding patent claims,
**characterized in that**
the synchronization signals are transmitted cyclically.

7. Method according to one of preceding Patent Claims 1 to 5,
**characterized in that**
the synchronization signals are transmitted acyclically.

8. Method according to one of the preceding patent claims,
**characterized in that**
a transmission process of the synchronization signals is started without delay.

9. Method according to one of the preceding patent claims,
**characterized in that**
the synchronization signal contains information concerning which transmitter sent this synchronization signal.

10. Communication element (1, 2) for time synchronization of a communication in an industrial setting containing real-time Ethernet systems based on time-sensitive networking TSN, comprising
- a first connecting element (13, 23) for setting up a first wireless connection for payload data transmission (DATA),
- a first element (11, 21), for the time synchronization, which initiates synchronization times, or said synchronization times are supplied to one such on the side to be synchronized, the synchronization times being converted into synchronization signals, having
- a highly accurate clock (12, 22), in particular a real-time clock,
- a second connecting element (14, 24) for transmitting the synchronization signals by way of a second transmission channel (SYNC), which is different from the first, wherein
this second transmission channel is likewise in the form of a wireless connection, and
the transmission process has a variable delay, and a hardware unit determines the value of the delay and uses the value as a correction value for the synchronization signal or conveys said value to the receiving communication element by way of the first radio system.

11. Communication element according to Patent Claim 10,
**characterized in that**
the second transmission channel (SYNC) is configured as a simple radio system, in particular a radio system with unidirectional radio transmission.

12. Communication element according to either of preceding Patent Claims 10 and 11,
**characterized in that**
the synchronization signals are transmitted by way of the second transmission channel (SYNC) in the form of single pulses.

13. Communication element according to either of preceding Patent Claims 10 and 11,
**characterized in that**
the synchronization signals are transmitted by way of the second transmission channel (SYNC) in the form of short telegrams.

14. Communication element according to one of preceding Patent Claims 10 to 13,
**characterized in that**
the first connecting element (13, 23) for the first wireless connection operates according to the iWLAN standard.

15. Communication element according to one of preceding Patent Claims 10 to 14,
**characterized in that**
the second connecting element performs a transmission process of the synchronization signals without delay, in particular using a method based on listen-before-talk.

## Revendications

1. Procédé de synchronisation temporelle d'une communication entre des éléments de communication (1, 2) dans un environnement industriel via une première connexion sans fil (DATA) avec des systèmes Ethernet en temps réel à base de réseau sensible au temps TSN, dans lequel
directement à partir d'une unité matérielle (11), qui est responsable de la synchronisation temporelle et qui dispose d'une horloge de haute précision (12), les temps de synchronisation sont initiés ou alimentés sur son côté à synchroniser, les temps de synchronisation étant convertis en signaux de synchronisation,
pour la transmission des signaux de synchronisation, un deuxième canal de transmission (SYNC) différent du premier est utilisé, ce deuxième canal de transmission étant également mis en œuvre sous la forme d'une connexion sans fil, et
le processus d'émission présente un retard variable, et l'unité matérielle détermine la valeur du retard et utilise la valeur comme valeur de correction sur le signal de synchronisation ou transmet par l'intermédiaire du premier système radio à l'élément de communication récepteur.

2. Procédé selon la revendication 1,
**caractérisé en ce que**
le deuxième canal de transmission (SYNC) est conçu sous la forme d'un système radio simple, en particulier un système radio avec transmission radio unidirectionnelle.

3. Procédé selon l'une quelconque des revendications précédentes, **caractérisé en ce que**
les signaux de synchronisation sont transmis sous la forme d'impulsions simples.

4. Procédé selon l'une quelconque des revendications précédentes 1 ou 2
**caractérisé en ce que**
les signaux de synchronisation sont transmis sous la forme de télégrammes courts.

5. Procédé selon l'une quelconque des revendications précédentes, **caractérisé en ce que**
la première connexion sans fil fonctionne selon la norme iWLAN.

6. Procédé selon l'une quelconque des revendications précédentes, **caractérisé en ce que**
les signaux de synchronisation sont transmis de manière cyclique.

7. Procédé selon l'une quelconque des revendications précédentes 1 à 5, **caractérisé en ce que**
les signaux de synchronisation sont transmis de manière acyclique.

8. Procédé selon l'une quelconque des revendications précédentes, **caractérisé en ce que**
un processus d'émission des signaux de synchronisation est lancé sans retard.

9. Procédé selon l'une quelconque des revendications précédentes, **caractérisé en ce que**
le signal de synchronisation contient une information sur l'émetteur à partir duquel ce signal de synchronisation a été émis.

10. Élément de communication (1, 2) pour une synchronisation temporelle d'une communication dans un environnement industriel avec des systèmes Ethernet en temps réel à base de réseau sensible au temps TSN, comprenant
- un premier élément de connexion (13, 23) pour établir une première connexion sans fil pour une transmission de données utiles (DATA),
- un premier élément (11, 21), pour la synchronisation temporelle, qui initie des temps de synchronisation ou qui en est alimenté sur son côté à synchroniser, les temps de synchronisation étant convertis en signaux de synchronisation, avec
- une horloge de haute précision (12, 22), en particulier une horloge réelle,
- un deuxième élément de connexion (14, 24) pour une transmission des signaux de synchronisation via un deuxième canal de transmission (SYNC) différent du premier, dans lequel
ce deuxième canal de transmission est également mis en œuvre sous la forme d'une connexion sans fil, et
le processus d'émission présente un retard variable et une unité matérielle détermine la valeur du retard et utilise la valeur comme valeur de correction sur le signal de synchronisation ou transmet à l'élément de communication récepteur par l'intermédiaire du premier système radio.

11. Élément de communication selon la revendication 10,
**caractérisé en ce que**
le deuxième canal de transmission (SYNC) est conçu sous la forme d'un système radio simple, en particulier un système radio avec transmission radio unidirectionnelle.

12. Élément de communication selon l'une quelconque des revendications précédentes 10 ou 11,
**caractérisé en ce que**
la transmission des signaux de synchronisation via le deuxième canal de transmission (SYNC) intervient sous la forme d'impulsions simples.

13. Élément de communication selon l'une quelconque des revendications précédentes 10 ou 11,
**caractérisé en ce que**
la transmission des signaux de synchronisation via le deuxième canal de transmission (SYNC) intervient sous forme de télégrammes courts.

14. Procédé selon l'une quelconque des revendications précédentes 10 à 13,
**caractérisé en ce que**
le premier élément de connexion (13, 23) pour la première connexion sans fil fonctionne selon la norme iWLAN.

15. Élément de communication selon l'une quelconque des revendications précédentes 10 à 14,
**caractérisé en ce que**
le deuxième élément de connexion effectue un processus d'émission des signaux de synchronisation sans retard, en particulier selon un procédé de type écouter avant de parler.
